# EUROPEAN PATENT APPLICATION

(11) **EP 0 716 804 A1**
(43) Date of publication of application: **19.06.1996**
(21) Application number: 95119772.2
(22) Date of filing: 15.12.1995
(51) Int. Cl.: A01G 9/10

(54) **Soil-decomposing seedling pot**

(30) Priority: 16.12.1994 JP 16548/94
(71) Applicant: Sugimoto, Ichiro, Machida-shi, Tokyo (JP)
(72) Inventor: Sugimoto, Ichiro, Machida-shi, Tokyo (JP)
(74) Representative: Merten, Fritz

(57) **Abstract**

A naturally decomposing seedling pot (2) having the properties of coconut shell powder, uses an artificial material suited for factory production, and has improved market value. Coconut shell powder is mixed into a biodegradable plastic made of carboxylic acid based compounds such as aliphatic acid or lactic acid. This mixture is molded into a pot body. The formed body can be made porous, non-porous or with a plurality of slits (8) or holes (6).

The pot made from injection molding has a smoothly finished surface and a stable center of gravity, thus adding to the market value. The biodegradable plastic and the coconut shell powder have water-holding properties and decompose back into the soil. This leaves behind the seedling, which can grow healthily, while the decomposed seedling pot enriches the soil environment.

## Description

### BACKGROUND OF THE INVENTION

The present invention relates to a seedling pot made from a decomposable material which decomposes in soil. More particularly, the present invention is directed to a soil-decomposing seedling pot that performs significantly well for plants during the process involving sowing of the seeds, raising of the seedling, and transferring to the earth.

Generally, seedlings used for gardening are marketed in a seedling pot after the seeds are sown in the pot and the seedling in the pot has been raised. Thereafter, the seedling is transplanted to a plot of land or soil placed in a container having a large surface area.

Since the load of known seedling pots, made of ceramic or unglazed material, is often excessive, making it difficult to transport over time and distance, and mindful that such pots are used only temporarily, seedling pots made from a plastic film composed of polyethylene resins and similar materials have found widespread use, due, in part, on their low weight properties. Such pots are particularly suited for lightweight transport and are commonly referred to as "polypots".

Polypots have the added advantages, for use in transporting plants, of being substantially inexpensive, being rust and water proof, and such pots do not decompose easily.

However, these properties are ill-suited for raising plants. The prominence of the extant difficulty among conventional seedling pots is the problem with disposing such prior art seedling pots. Particularly, conventional polypots are plagued by numerous disadvantages, too many to mention.

A chief disadvantage associated with conventional polypots is that such pots are ill-suited for storage, disposal and incineration after the seedlings contained in them are transplanted. Thus, conventional polypots are disadvantageous for gardeners because they require extensive maintenance.

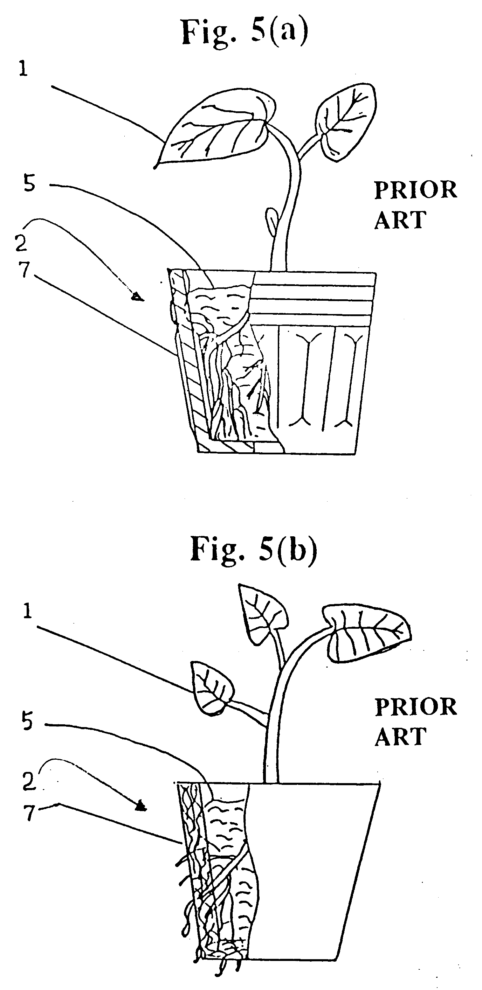

Referring to Fig. 5, a seedling 1 is planted in a seedling pot 2, which is filled with a soil 5. If seedling 1 and seedling pot 2 are transferred onto soil 5 directly, the inherent properties of seedling pot 2 can cause the resulting roots to be isolated from the soil. This, in turn, significantly impedes the growth of the roots. Therefore, it is a necessary step to transplant seedling 1 from seedling pot 2.

Also such conventional transplantation procedures prevent immature seedlings from rooting properly after the transplantation. Additionally, seedlings which develop rapidly in seedling pot 2 may experience root breakage during the step of transplanting, significantly retarding the growth process.

Referring to Fig. 5(a), polypot seedling pot, a polypot measuring from 50 to 150mm in pot height and outer radius, and measuring 0.4mm or less in thickness is shown. Such a prior art seedling pot does not allow enough space for the unobstructed growth and development of seedling roots.

When using such a prior art pot, one must be careful in that the growing seedling roots tend to circle around the inner wall of the pot. Unlike unglazed pots, water evacuation from the roots is substantially ineffective leading to rotting of the overall plant.

Prior art attempts to reduce rotting of the seedling and its roots have included the use of coconut fibers having a porous cross section. Referring to Fig. 5(b), there is shown seedling pot 2 wherein a pot body 7 includes coconut fibers or coconut shell fibers having a porous vertical cross section. Such pots generally facilitate root growth through pot body 7 notwithstanding the small size of the seedling pot. This feature, effectively overcomes the problem affecting growth of conventional seedling 1.

Also, the pot facilitates the transplantation of seedling 1 to soil 5 together with seedling pot 2, while promoting the decomposition of the coconut fibers into soil 5 over time.

However, the small diameter of the seedling pot has interfered with the growth process of the seedlings contained therein. Indeed, a prominent drawback with such a conventional seedling pot is that the fibrous seedling pot 2 is made entirely from natural fiber materials such that the wall thickness is often greater when molding the pot. This drawback, in turn, yields a seedling pot having smaller container volume.

Since, such conventional pots are cushion molded, the end product often exhibits significant irregularities on its surface. Other prominent disadvantages associated with such conventional seedling pots is the instability of the seedling pot in that such pots easily tip over. This drawback results from the shifting of the center of gravity upward when a seedling is planted. Also, mass production of such pots will Since the pots would be mass produced, variations in the shapes would be unavoidable, thus lowering market value.

Indeed, prior art attempts have generally been unsuccessful in providing seedling pots which are both lightweight and practical.

Further, prominent among the drawbacks of known seedling pots are the overall production costs. The present invention attempts to reduces the overall cost of a seedling pot, thus enhancing the economic utility of applicants' teachings.

Longstanding problems remain to be solved by the subject matter of the present invention.

### OBJECT AND SUMMARY OF THE PRESENT INVENTION

In view of the above problems, it is an object of the present invention to overcome the various drawback associated with conventional seedling pots.

It is another object of the present invention to provide a biodegradable seedling pot capable of degrading into the soil.

It is another object of the invention to provide a seedling pot which exhibits properties similar to those of natural fiber seedling pots which do not require transplanting.

It is yet another object of the invention to provide seedling pots which can be mass produced with uniform shapes and exhibit fewer deformities compared to conventional seedling pots.

Briefly stated, an embodiment of the present invention provides a naturally decomposing seedling pot having the properties of coconut shell powder, uses an artificial material suited for factory production, and has improved market value. Coconut shell powder is mixed into a biodegradable plastic made of carboxylic acid based compounds such as aliphatic acid or lactic acid. This mixture is molded into a pot body. The formed body can be made porous, non-porous or with a plurality of slits or holes.

The pot made from injection molding has a smoothly finished surface and a stable center of gravity, thus adding to the market value. The biodegradable plastic and the coconut shell powder have water-holding properties and decompose back into the soil. This leaves behind the seedling, which can grow healthily, while the decomposed seedling pot enriches the soil environment.

An embodiment of the invention provides a biodegradable seedling pot comprising a body made of a biodegradable seedling pot mixture of coconut shell powder mixed with a biodegradable plastic, and the biodegradable plastic further includes an aliphatic polyester.

Another embodiment provides the aliphatic polyester includes at least one of a lactic acid resin and a carbonic acid resin.

Still another embodiment of the present invention provides a biodegradable seedling pot comprising a body made of a biodegradable seedling pot mixture of coconut shell powder mixed with a biodegradable plastic, the biodegradable plastic further includes an aliphatic polyester, the coconut shell powder is present in the amount of about 30 to 90 percent and the balance is substantially of the biodegradable plastic, the biodegradable seedling pot mixture is injection molded to form the body, and the body is porous.

Yet another embodiment of the present invention provides a biodegradable seedling pot comprising a body made of a biodegradable seedling pot mixture of coconut shell powder mixed with a biodegradable plastic, the biodegradable plastic further includes an aliphatic polyester, the coconut shell powder is present in the amount of about 30 to 90 percent and the balance is substantially of the biodegradable plastic, the biodegradable seedling pot mixture is injection molded to form the body, and the body is non-porous.

The above, and other objects, features and advantages of the present invention will become apparent from the following description read in conjunction with the accompanying drawings, in which like reference numerals designate the same elements.

### BRIEF DESCRIPTION OF THE DRAWINGS

Fig. 1(a) is a block diagram showing the configuration of the material in the first embodiment.

Fig. 1(b) is a block diagram showing the configuration of the material in another embodiment.

Fig. 1(c) is a block diagram showing the configuration of the material in yet another embodiment.

Fig. 2(a) is a partial cross-sectional view of a first embodiment of the invention.

Fig. 2(b) is a partial cross-sectional side view of another embodiment of the invention.

Fig. 2(c) is a partial cross-sectional side view of still another embodiment of the invention.

Fig. 2(d) is a partial cross-sectional side view of yet another embodiment of the invention.

Fig. 3 is a figure indicating experimental data of the biodegradation of a 0.2mm thick seedling pot in soil for the purpose of describing characteristics of the material used in the seedling pot of the present invention.

Fig. 4 is a figure indicating experimental data of biodegradation in soil for the purpose of describing the life cycle of the seedling pot of the present invention.

Fig. 5(a) is a partial cross-sectional side view of a prior art device.

Fig. 5(b) is a partial cross-sectional side view of another prior art device.

### DETAILED DESCRIPTION OF THE PREFERRED EMBODIMENTS

The present invention contemplates a biodegradable seedling pot which includes a mixture containing an appropriate amount of coconut shell powder and a biodegradable plastic material. The biodegradable plastic material includes at least one, more preferably a plurality, of an aliphatic polyester such as lactic acid. This biodegradable mixture is then formed into a pot body by any convenient means such as, for example, injection molding. Depending upon the type of seedling selected, the pot is made non-porous, or porous at the pot body. Alternatively, a plurality of slits can be made at appropriate positions.

Thus, a seedling pot is formed by any convenient means such as, for example, injection molding, a mixture of biodegradable plastic and natural coconut shell powder. The surface of the outer wall and the bottom plate can be processed so that they are smooth. Likewise, the center of gravity can be adjusted so that the seedling pot is stable.

Coconut shell powder, which exhibits good water holding properties (aqua friendly), is used for the entire pot body. Essentially, the seedling pot of the present invention has main elements of the pot that decompose into the soil, leaving behind the developed seedling in the soil. In addition, the decomposed seedling pot advantageously enriches the soil.

Hereunder, the invention is described with reference to the accompanying drawings.

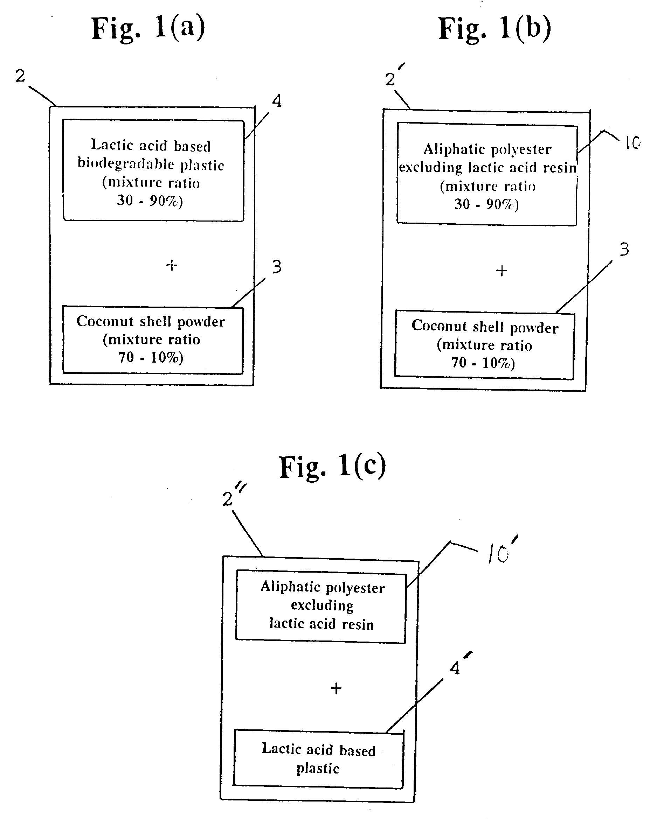

Referring to Fig. 1(a), there is shown a block diagram of the configuration of materials in an embodiment of the present invention. Seedling pot 2 is formed from a mixture of a lactic acid based biodegradable plastic 4 and a coconut shell powder 3, mixed at a ratio in the range of 30-to-70 to 90-to-10. The ratio of the mixture is selected to correspond to the seedling to be sown, with the ratio having a total of 100. This mixture is formed into a pot body by any convenient means such as, for example, injection molding to form seedling pot 2.

Referring to Fig. 1(b), there is shown a block diagram of the configuration of materials in another embodiment. Seedling pot 2' is formed from a mixture of a carbonic acid ester base compound 10 and coconut shell powder 3, mixed at a ratio in the range of 30-to-70 to 90-to-10. The ratio of the mixture is selected to correspond to the seedling to be sown, with the ratio having a total of 100. This mixture is formed into a pot body by any convenient means such as, for example, injection molding to form seedling pot 2'.

Referring to Fig. 1(c), there is shown a block diagram of the configuration of materials in still another embodiment. Seedling pot 2'' is formed from a mixture of a carbonic acid ester base compound 10' and aliphatic polyester 4'. Thus, it is possible to provide a good environment for the soil where, for example, the soil has high alkali levels. In such cases, the amount of acetate-based aliphatic acids (carbonic acid ester based compound 10') is increased, causing a mixture ratio such that the acetic acid solution generated by the seedling pot in water exhibits a weak acidity.

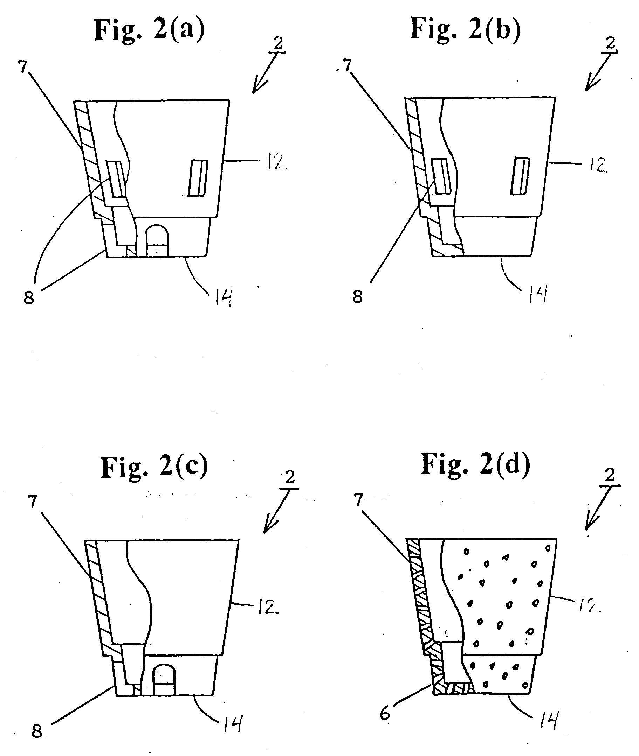

Referring to Fig. 2(a) to 2(c), seedling pot 2 is molded, by any convenient means such as, for example, injection molding, based on the mixture configuration described above with a plurality of slits 8 on a wall 12 or a bottom 14, or both, of pot body 7. Slits 8 pass from the inner surface to the outer surface.

Referring to Fig. 2(d), a plurality of permeation holes 6 can be provided on wall 12 or bottom 14 of pot body 7. Permeation holes 6 essentially give seedling pot 2 similar properties to one made from coconut fibers.

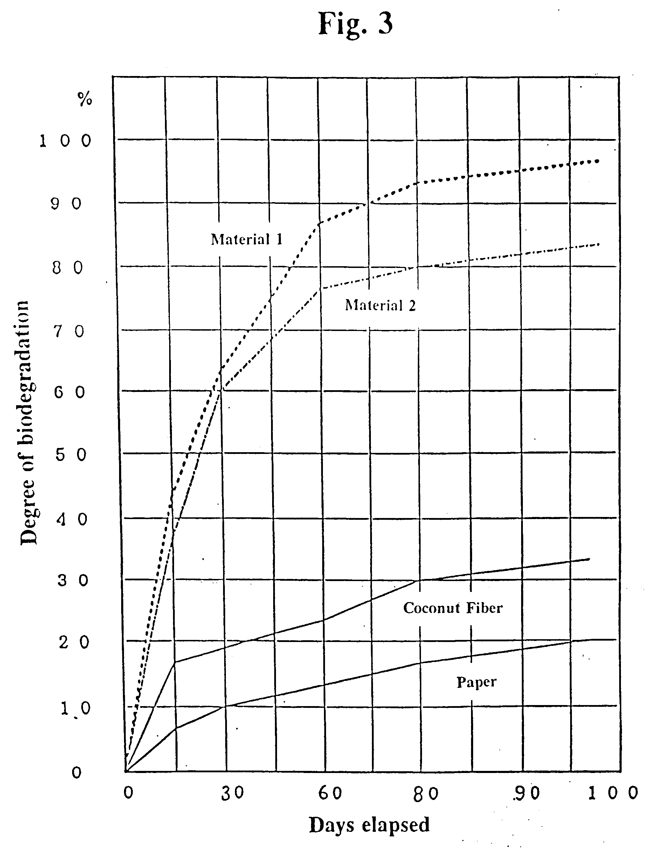

Referring to Fig. 3, data from an experiment on biodegradation of a seedling pot (0.2cm thick) in soil is shown. The degree of biodegradation in percent is plotted against the number of elapsed days for four samples, each being material 1, material 2, coconut fiber or paper. Material 1 comprises a 6-to-4 mixture of coconut shell powder 3 and carbonic acid ester based compound 10 {an aliphatic polyester that is not a lactic acid resin}. Material 2 comprises a 5-to-5 mixture of coconut shell powder 3 with lactic acid-based biodegradable plastic 4 (with a melting point of 170 degrees C). The data is applicable for the material before molding and after molding.

It is clear, from comparing the curves for material 1 or material 2 with those for coconut or paper, that the biodegradation rate of biodegradable plastic materials 1 or 2 before molding is twice or more of the rate for the coconut fiber used in the prior art (30 percent biodegradation after 90 days). In absolute terms, material 1 and material 2 show a final biodegradation of 80 percent or more from their original masses.

Based on these tests, a comparison of 20 categories was conducted between the material described above and the material used in the prior art comparative embodiments. Referring to Table 1, comparative example 1 is seedling pot 2 made from polypot and comparative example 2 is seedling pot 2 made from coconuts. A designation "A' indicates very good, "B" indicates normal, "C" indicates somewhat inferior, "D" indicates bad. For the overall evaluation, "VG" indicates very good and "NG" indicates unacceptable.

**Table 1**

| | Embodiment 1 | Embodiment 2 | Comp. exmple 1 | Comp. exmple 2 |
|---|---|---|---|---|
| | Material 1 | Material 2 | Polypot | Coconut |
| Ease of sowing | A | A | A | A |
| Growth characteristic | A | A | D | B |
| Biodegradation | A | A | D | B |
| Water permeability | B | B | D | A |
| Water absorption | B | B | C | B |
| Water retention | A | A | A | D |
| Air permeability | C | C | D | A |
| Blocking sunlight | A | A | A | A |
| Blocking air | A | A | A | D |
| Root generation | A | A | D | C |
| Root breaks | A | A | D | D |
| Transplantation | A | A | D | C |
| Plant damage | A | A | D | A |
| Watering ease | A | A | A | A |
| Sterility | A | A | A | C |
| pH value | A | A | A | B |
| Shape stability | A | A | A | D |
| Tipping stability | A | A | A | D |
| Lightness | A | A | A | D |
| Wall thickness | A | A | A | D |
| Overall | VG | VG | NG | NG |

Referring to Table 1, material 1 and material 2 used in the seedling pot of the present invention are generally superior to comparative examples of polypot or coconut. Except for water permeability and air permeability, the present invention is superior to comparative example 2 coconut. Accordingly, the present invention includes the presence of slits 8 or permeation holes 6 to effectively compensate for weaknesses in the inherent properties of water permeability and gas permeability of the bulk material.

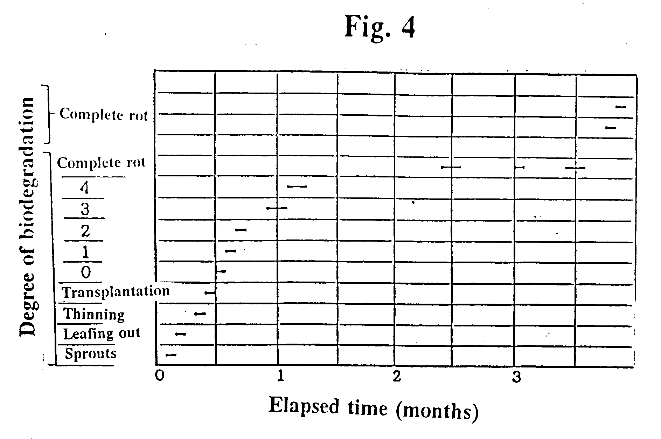

Referring to Fig. 4, there is shown a graph of the biodegradation in soil of seedling pot 2 made of material 1 after molding. The graph describes the life cycle of the seedling pot. Material 1 comprises a 6-to-4 mixture of coconut shell powder 3 and carbonic acid ester based compound 10 (an aliphatic polyester that is not a lactic acid resin). The vertical axis is labelled to indicate the life cycle of seedling 1 in the initial utilization of seedling pot 2 from "sprouts", the time when the sown seeds form sprouts; to "leafing out", the time when the young seedlings form fully shaped leaves; to "thinning", the time when the seedlings are thinned to promote strong growth; and finally to "transplantation" when seedling 1 and seedling pot 2 are transplanted into the ground. The vertical axis is then divided into arbitrary 5 degrees of biodegradation with the fifth stage, after stage number 4, being complete rot of seedling pot 2.

Specifically, the experiment was preformed by sowing sage in seedling pot 2 molded from material 1. The entire pot was transplanted to soil, and the degradation of seedling pot 2 in soil was tested and the life cycle of the seedling pot was studied.

In this study, seedling pot 2 biodegraded in a little over two months with no obstruction to the growth of seedling 1 at all. It was found that in a little over three months the test pot was biodegraded, "complete rot", however that material that was biodegraded from seedling pot 2 was still decomposing steadily as can be seen by the rise in "complete rot" of the degree of biodegradation shown by the plotted data after the three and a half month mark.

Referring to Table 2, the production characteristics and biodegradation characteristics of the seedling pot of the present invention are compared to comparative example 1 polypot of the prior art described above from Table 1.

**Table 2**

| | Embodiment 1 | Embodiment 2 | Comp. exmple |
|---|---|---|---|
| | Material 1 | Material 2 | Polypot |
| Ease of shaping | A | A | A |
| Melting point {deg. C} | 96 | 170 | |
| Biodegradation | A | A | D |
| Soil characteristics | A | A | D |
| Total heat output (cal/g) | 5800 | 4560 | |
| Overall | VG | VG | NG |

The molded seedling pot described above had outer dimensions of 140mm (upper surface) x 110mm (bottom surface) x 120mm (overall height) x 2mm (thickness). Four slits 8 measuring 7mm x 20mm were on the surface. Four slits having an L-shaped cross-section measuring 7mm x 28mm were on the bottom surface.

Depending on the type of seedling 1 or the environment in which seedling 1 is to be placed, it is possible for seedling pot 2 to be molded without slits 8 or permeation holes 6 on pot body 7 (not shown in the drawings).

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

According to the present invention, a seedling pot is made from a designed mixture of natural and artificial materials with the intended use and performance characteristics in mind. The seedling pot decomposes over time. The biodegradable materials forming the seedling pot if the invention do not pollute the soil environment and do not obstruct growth of the seedling. Thus, the seedling pot is disposable without harm to the environment. The root breaks and root rot experienced with the prior art is avoided, and the effort required in disposal is eliminated.

The seedling pot of the present invention is suited for factory production, providing relatively smooth and thin surfaces with improved precision possible in the molding process. A stable center of gravity, which was not provided in the prior art, is possible. Overall, the present invention provides many advantages including increased market value and a wide range of design combination options for the biodegradable plastic.

## Claims

1. A biodegradable seedling pot comprising:
a body composed of a biodegradable seedling pot mixture containing coconut shell powder and a biodegradable plastic; and
said biodegradable plastic further includes an aliphatic polyester.

2. A biodegradable seedling pot of claim 1 wherein said aliphatic polyester includes lactic acid resin.

3. A biodegradable seedling pot of claim 1 wherein said aliphatic polyester includes carbonic acid resin.

4. A biodegradable seedling pot of claim 1 wherein
said body includes a plurality of openings.

5. A biodegradable seedling pot of claim 1 wherein said body is porous.

6. A biodegradable seedling pot of claim 1 wherein said body is non-porous.

7. A biodegradable seedling pot of claim 1 wherein said body is formed by injection molding.

8. A biodegradable seedling pot of claim 1 wherein said coconut shell powder is present in the amount of about 30 to 90 weight percent and a balance substantially of said biodegradable plastic.

9. A biodegradable seedling pot comprising:
a body made of a biodegradable seedling pot mixture of coconut shell powder mixed with a biodegradable plastic;
said biodegradable plastic further includes an aliphatic polyester;
said coconut shell powder is present in the amount of about 30 to 90 weight percent and a balance of substantially of said biodegradable plastic;
said biodegradable seedling pot mixture is injection molded to form said body; and
said body is porous.

10. A biodegradable seedling pot of claim 9 wherein
said body includes a plurality of openings.

11. A biodegradable seedling pot of claim 9 wherein
said aliphatic polyester includes at least one of a lactic acid resin and a carbonic acid resin.

12. A biodegradable seedling pot comprising:
a body made of a biodegradable seedling pot mixture of coconut shell powder mixed with a biodegradable plastic;
said biodegradable plastic further includes an aliphatic polyester;
said coconut shell powder is present in the amount of about 30 to 90 weight percent and a balance of substantially of said biodegradable plastic;
said biodegradable seedling pot mixture is injection molded to form said body; and
said body is non-porous.

13. A biodegradable seedling pot of claim 12 wherein
said body includes a plurality of openings.

14. A biodegradable seedling pot of claim 12 wherein
said aliphatic polyester includes at least one of a lactic acid resin and a carbonic acid resin.
